# EUROPEAN PATENT APPLICATION

(11) **EP 2 680 404 A1**
(43) Date of publication of application: **01.01.2014**
(21) Application number: 12174255.5
(22) Date of filing: 29.06.2012
(51) Int. Cl.: H02K 3/22

(54) **Conductor for an electric machine**

(71) Applicant: Alstom Technology Ltd, 5400 Baden (CH)
(72) Inventor: Moebius, Jens, 5704 Egliswil (CH); Diestel-Feddersen, Lennart, 5200 Brugg (CH); Baumann, Jörg Stefan, 5306 Tegerfelden (CH)

(57) **Abstract**

The conductor (10) for an electric machine winding comprises an elongated conductive body (11) and channels (12) in the elongated conductive body (11). The channels (12) have protrusions (13).

## Description

### TECHNICAL FIELD

The present disclosure relates to a conductor for an electric machine.

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines such as transformers.

### BACKGROUND

Electric machines such as electric generators or motors have a stator and a rotor. The stator has a stator core with a stator winding. The rotor has a rotor core or body with a rotor winding.

The windings include a conductor (bar shaped conductor) that can be covered by insulation.

During operation the windings undergo heating and are usually cooled.

In order to cool the windings, the conductors can have one or more channels (i.e. they can have a tubular structure), such that a cooling medium (gas such as air or hydrogen or liquid such as water) is conveyed through them.

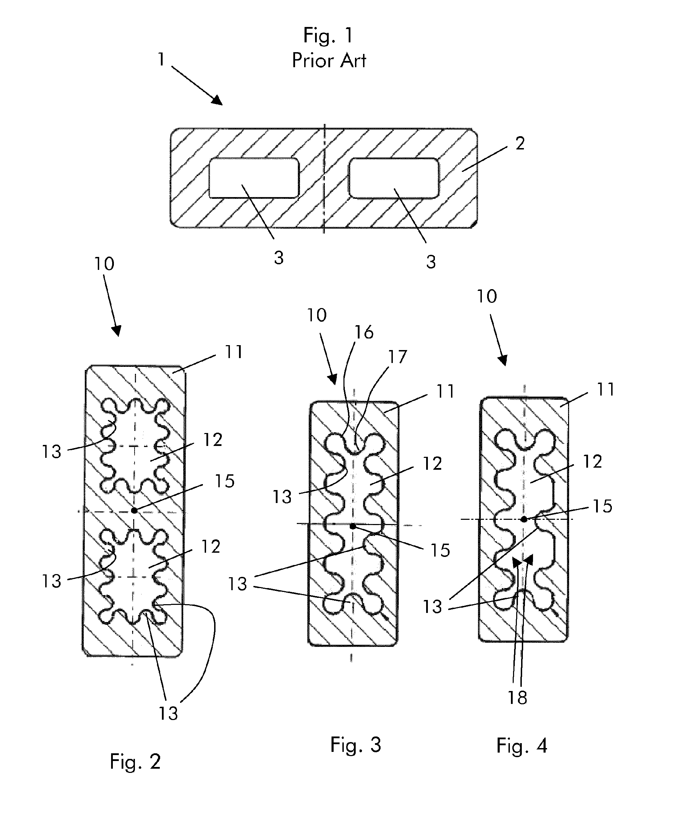

With reference to figure 1, the cross section of a traditional conductor 1 for a winding is shown.

The conductor 1 is made for example of copper and has an elongated conductive body 2 and two channels 3.

The channels 3 have rectangular or square cross section, usually with rounded edges.

Even if the described existing conductors 1 proved to have good features, new conductors that allow increased thermal exchanges between the cooling medium flowing in the channels 3 and the conductive body 2 are needed.

This feature would for example allow an increase of the power of the electric machines without increasing their size or they could allow a reduction of the size of the electric machines for the same power. Any combination of these features is anyhow possible.

### SUMMARY

An aspect of the disclosure includes providing a conductor with increased thermal exchange capability when compared to existing conductors.

These and further aspects are attained by providing a conductor in accordance with the accompanying claims.

### BRIEF DESCRIPTION OF THE DRAWINGS

Further characteristics and advantages will be more apparent from the description of a preferred but non-exclusive embodiment of the conductor, illustrated by way of non-limiting example in the accompanying drawings, in which:
Figure 1 is a schematic view of an existing conductor;
Figures 2 through 4 show different embodiments of the conductor according to the disclosure.

### DETAILED DESCRIPTION OF EXEMPLARY EMBODIMENTS

With reference to the figures, these show a conductor 10 for an electric machine winding.

The conductor 10 comprises an elongated conductive body 11 having the shape of a bar.

The conductor is usually made out of copper or copper alloys, other conductive materials are anyhow possible.

The conductive body 11 has at least a channel 12 (tubular conductor); in this respect figure 2 shows two channels 12 and figures 3 and 4 show only one channel 12, it is anyhow clear that any number of channels is possible.

The channels 12 have protrusions 13.

As shown, the protrusions 13 extend from the surface of the channels 12 to the inside of the channels 12.

The elongated conductive body 11 has a longitudinal axis 15 and the channels 12 extend substantially parallel to the longitudinal axis 15.

The protrusions 13 are defined by ribs that preferably extend substantially parallel to the longitudinal axis 15.

In addition, the protrusions 13 preferably have rounded edges at their root 16 and tip 17.

Figure 4 shows another embodiment of the conductor 10.

In the conductor of figure 4, different parts 18 of the channels 12 have a different number of protrusions 13 such as ribs.

Preferably, opposite parts 18 of the channels 12 have the different number of protrusions 13. For example this can be useful when bending the conductor 10.

As shown, the conductor 10 preferably has two channels 12, each channel having the protrusions 13.

It is clear that the channels 12 can have different shapes (in particular the protrusions 13, but alto the channel 12 itself) and dimensions and they are optimized based on the used cooling medium pressure inside the electric machine, cooling medium velocity in the channels 12 and length of the channels.

In addition the conductors 10 can be used to manufacture a rotor winding and/or a stator winding (in this case preferably the conductor 10 has insulation around it).

In order to manufacture the conductors 10, a bar is extruded to define the desired cross section.

Then the bars can be bent to realise the stator and/or rotor windings.

Naturally the features described may be independently provided from one another.

In practice the materials used and the dimensions can be chosen at will according to requirements and to the state of the art.

### REFERENCE NUMBERS

- 1: conductor
- 2: conductive body
- 3: channel
- 10: conductor
- 11: conductive body
- 12: channel
- 13: protrusion
- 15: axis
- 16: root
- 17: tip
- 18: part

## Claims

1. A conductor (10) for an electric machine winding comprising an elongated conductive body (11) and at least a channel (12) in the elongated conductive body (11), **characterised in that** the at least a channel (12) has protrusions (13).

2. The conductor (10) according to claim 1, **characterised in that** the elongated conductive body (11) has a longitudinal axis (15), and **in that** the at least a channel (12) extends substantially parallel to the longitudinal axis (15).

3. The conductor (10) according to claim 1, **characterised in that** the protrusions (13) are defined by ribs.

4. The conductor (10) according to claim 3, **characterised in that** the elongated conductive body (11) has a longitudinal axis (15), and **in that** the ribs extend substantially parallel to the longitudinal axis (15).

5. The conductor (10) according to claim 1, **characterised in that** the protrusions (13) have rounded edges.

6. The conductor (10) according to claim 3, **characterised in that** different parts (18) of the at least a channel (12) have a different number of ribs.

7. The conductor (10) according to claim 3, **characterised in that** opposite parts (18) of the at least a channel (12) have a different number of ribs.

8. The conductor (10) according to claim 1, **characterised by** having two channels (12), each channel (12) having the protrusions (13).

9. The conductor (10) according to claim 1, **characterised in that** the channels shape and dimension are optimized based on the used cooling medium pressure inside the electric machine, cooling medium velocity in the at least a channel (12) and length of the at least a channel (12).

10. A rotor winding, **characterised by** having a conductor (10) according to claim 1.

11. A stator winding having a conductor (10) and insulation around it, **characterised by** having a conductor (10) according to claim 1.
